(19) Europäisches Patentamt
European Patent Office
Office européen des brevets

(11) Numéro de publication: **0 030 756**
**A1**

(12) # DEMANDE DE BREVET EUROPEEN

(21) Numéro de dépôt: **80201142.9**

(22) Date de dépôt: **03.12.80**

(51) Int. Cl.$^3$: **C 01 D 3/08**
C 01 D 3/14, B 01 D 11/02

(30) Priorité: **12.12.79 FR 7930810**

(43) Date de publication de la demande:
**24.06.81 Bulletin 81/25**

(84) Etats Contractants Désignés:
**BE DE FR GB IT NL**

(71) Demandeur: **SOLVAY & Cie (Société Anonyme)**
**Rue du Prince Albert, 33**
**B-1050 Bruxelles(BE)**

(72) Inventeur: **Gillet, André**
**Avenue Gustave Latinis 8**
**B-1030 Bruxelles(BE)**

(72) Inventeur: **Rasy, Alfred**
**Landbouwlaan, 6**
**B-1900 Overijse(BE)**

(74) Mandataire: **Eischen, Roland**
**Solvay & Cie Département de la Propriété Industrielle**
**Rue de Ransbeek 310**
**B-1120 Bruxelles(BE)**

(54) **Procédé et installation pour la production d'une saumure d'halogénure métallique au départ d'une masse d'halogénure métallique contenant des impuretés solubles.**

(57) L'invention concerne un procédé et une installation pour la production d'une saumure au départ d'une masse d'halogénure métallique contenant des impuretés solubles.

On fait progresser la masse d'halogénure métallique de haut en bas dans une chambre supérieure de lavage (1) puis une chambre inférieure (3), à contre-courant d'une solution aqueuse. Dans la chambre supérieur (1), les impuretés sont dissoutes dans une fraction de la solution provenant de la chambre inférieure (3) puis converties en composés insolubles qui migrent vers la chambre inférieure (3); une autre fraction de la solution entraîne ces composés insolubles vers une troisième chambre (5) où ils floculent puis sédimentent vers la chambre inférieure (3).

L'invention s'applique à la production des saumures saturées de chlorure de sodium.

*FIG 1*

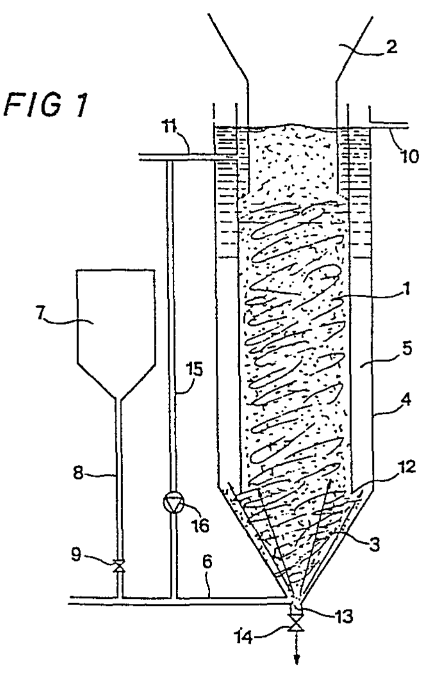


EP 0 030 756 A1

Procédé et installation pour la production d'une saumure d'halogénure métallique au départ d'une masse d'halogénure métallique contenant des impuretés solubles

Cas S.79/20

SOLVAY & Cie (Société anonyme)

La présente invention a pour objet un procédé et une installation qui permettent de produire des saumures d'halogénure métallique de grande pureté, au départ d'une masse d'halogénure métallique contaminée par des impuretés normalement solubles dans les saumures.

Diverses industries requièrent l'utilisation de quantités importantes de saumure concentrée d'halogénure métallique de grande pureté. C'est principalement le cas du procédé de fabrication de la soude à l'ammoniaque et des procédés d'électrolyse pour la production de chlore et de solution aqueuse d'hydroxyde de sodium, pour lesquels il est généralement nécessaire de disposer de saumure sensiblement saturée de chlorure de sodium, de très grande pureté.

Le sel employé pour la production des saumures de chlorure de sodium destinées à ces industries est généralement obtenu par extraction mécanique à l'intérieur d'un gisement de sel gemme, par évaporation d'eau de mer ou par évaporation d'une saumure obtenue par percolation forcée d'eau ou d'une saumure diluée à travers un gisement de sel gemme.

Ce sel est habituellement contaminé par diverses impuretés solubles qui s'avèrent souvent nuisibles au bon fonctionnement

des industries auxquelles les saumures sont destinées, ou à la qualité des produits de ces industries. C'est principalement le cas du calcium et du magnésium qui sont généralement présents en quantités non négligeables dans les gisements de sel gemme, par exemple à l'état d'anhydrite, de carnallite, de glaubérite ou de polyhalite. Pendant la dissolution du sel dans de l'eau, ces composés du calcium et du magnésium tendent également à se dissoudre. La présence d'ions calcium et d'ions magnésium dans les saumures peut porter préjudice à la qualité de la soude obtenue par le procédé à l'ammoniaque, ainsi qu'au bon fonctionnement des cellules d'électrolyse.

Divers procédés ont déjà été proposés pour produire des saumures de chlorure de sodium de grande pureté, au départ de sel contenant des impuretés nuisibles, solubles dans les saumures.

Ainsi, dans la demande de brevet japonais 72/13090 de Ebara Mfg. Co., du 23 mai 1969, on propose une installation comprenant une enceinte verticale, alimentée par une masse de sel brut à sa partie supérieure et par de l'eau ou une saumure diluée dans sa zone médiane. L'eau ou la saumure diluée introduite dans l'enceinte y est divisée en une fraction ascendante circulant à contre-courant du sel brut et une fraction descendante. La fraction ascendante sert à laver le sel, en dissolvant les impuretés solubles qu'il contient. Celles-ci sont ensuite converties en composés insolubles par des réactifs appropriés, introduits dans la masse de sel. A la partie supérieure de l'enceinte, on récupère une saumure saturée contenant les composés insolubles que l'on peut séparer par décantation et filtration. On soutire par ailleurs à la base de l'enceinte une saumure concentrée, exempte d'impuretés dissoutes et de composés insolubles, qui correspond à la fraction descendante d'eau ou de saumure diluée.

Ce procédé connu présente le désavantage de nécessiter une décantation et une filtration pour séparer les composés insolubles de la saumure saturée, soutirée à l'extrémité supérieure de l'enceinte. Une telle opération est généralement difficile à exécuter, à cause notamment de la mauvaise morphologie cristalline

des composés insolubles, et elle requiert de ce fait des dispositifs coûteux. Elle impose par ailleurs des arrêts périodiques de l'installation pour vider les filtres.

Ce procédé connu présente par ailleurs la particularité de nécessiter un débit élevé pour la fraction ascendante de saumure, afin que celle-ci soit à même d'entraîner avec elle les composés insolubles hors de la masse de sel. Cette particularité du procédé conduit à deux désavantages : d'une part, des particules de chlorure de sodium sont inévitablement entraînées en suspension dans la saumure saturée qui quitte l'enceinte et, d'autre part, le débit élevé de saumure impose des appareils de grandes dimensions pour la séparation des composés insolubles par décantation et filtration.

Le procédé connu décrit plus haut présente la particularité supplémentaire d'imposer un contrôle précis et permanent des débits respectifs des deux fractions de saumure et du débit de sel, afin que la masse de sel qui est traversée de haut en bas par la seconde fraction soit entièrement exempte d'impuretés solubles et de composés insolubles. Une telle condition est difficile à réaliser, d'autant plus que cette masse de sel épuré est progressivement compactée par la fraction descendante de saumure, ce qui a pour conséquence de modifier sa résistance à la percolation de la saumure. Des arrêts périodiques de l'installation sont dès lors nécessaires pour décompacter la masse de sel.

L'invention a pour objectif de fournir un procédé perfectionné et une installation pour sa mise en oeuvre, qui évitent les inconvénients précités et permettent de produire de manière ininterrompue et économique, des saumures d'halogénure métallique de grande pureté.

En conséquence, l'invention concerne un procédé pour la production d'une saumure d'halogénure métallique, au départ d'une masse d'halogénure métallique contenant des impuretés solubles, selon lequel on dissout d'abord les impuretés solubles dans un bain de lavage que l'on fait circuler de bas en haut à travers la

masse d'halogénure métallique, on les convertit ensuite en composés insolubles, puis on dissout la masse d'halogénure métallique, exempte d'impuretés solubles, dans une solution aqueuse; selon l'invention, on règle la vitesse ascensionnelle du bain de lavage pour qu'elle soit inférieure à la vitesse de sédimentation des composés insolubles et, pour dissoudre la masse d'halogénure métallique dans la solution aqueuse, on fait circuler celle-ci de bas en haut à travers la masse d'halogénure métallique, on y fait floculer les composés insolubles et on laisse sédimenter les composés insolubles floculés dans ou sur la masse d'halogénure métallique.

Dans le procédé selon l'invention, on entend désigner par masse d'halogénure métallique, un ensemble de particules solides d'halogénure métallique hydrosoluble, de dimensions quelconques, analogues ou disparates. Les particules peuvent se présenter à l'état cristallin ou amorphe.

Par exemple, dans le cas où le procédé selon l'invention est appliqué à la production d'une saumure de chlorure de sodium, la masse d'halogénure métallique est une masse de sel qui peut être obtenue par évaporation d'eau de mer ou par évaporation d'une saumure saturée obtenue par circulation forcée d'eau ou d'une saumure diluée à travers un gisement de sel gemme. En variante, la masse de sel peut aussi être obtenue par une extraction mécanique dans un gisement de sel gemme, suivie d'un concassage, d'un broyage et d'un criblage.

Toutes autres choses étant égales, il est préférable d'utiliser une masse d'halogénure métallique dont les particules sont de petites dimensions, afin d'accélérer leur dissolution et de libérer les impuretés solubles.

Les impuretés solubles de la masse d'halogénure métallique sont des impuretés qui sont normalement solubles dans la saumure d'halogénure métallique que l'on cherche à produire. Elles sont localisées en majeure partie à l'état dispersé entre les particules d'halogénure métallique ou dans la couche superficielle de ces particules.

Dans le cas où la masse d'halogénure métallique est une masse de sel provenant d'un gisement de sel gemme, les impuretés solubles les plus nuisibles consistent en des composés du calcium et du magnésium.

Le bain de lavage utilisé dans la mise en oeuvre du procédé selon l'invention doit être choisi en sorte de dissoudre les impuretés nocives de la masse d'halogénure métallique. En général, on utilise de l'eau ou une solution aqueuse d'halogénure métallique, de préférence une solution aqueuse dont la teneur en halogénure métallique est au moins égale à 40 % en poids de sa valeur dans une solution saturée. On utilise avantageusement des solutions aqueuses dont la teneur en halogénure métallique est au moins égale à 70 % du poids d'halogénure métallique contenu dans une solution saturée; les solutions saturées sont préférées.

Dans le procédé selon l'invention, la solution aqueuse mise en oeuvre pour dissoudre la masse d'halogénure métallique doit être de l'eau ou une solution d'halogénure métallique qui n'est pas saturée dans les conditions de pression et de température mises en oeuvre dans l'exécution du procédé. On utilise de préférence des solutions aqueuses dont la teneur en halogénure métallique n'excède pas 90 % du poids d'halogénure métallique contenu dans une solution saturée. Des valeurs qui conviennent généralement bien sont celles comprises entre 75 et 85 %, qui correspondent aux saumures résiduaires des cellules d'électrolyse à cathodes de mercure ou à membranes échangeuses d'ions, pour la production de chlore.

Le moyen utilisé pour convertir les impuretés solubles, dissoutes dans le bain de lavage, en composés insolubles n'est généralement pas critique, à condition qu'il ne libère pas d'autres impuretés solubles susceptibles de nuire à la qualité recherchée pour la saumure à préparer. Il peut généralement être obtenu en introduisant un ou plusieurs réactifs appropriés dans la masse d'halogénure métallique, qui soient capables de réagir avec les impuretés dissoutes pour former les composés insolubles. Les réactifs utilisés doivent être convenablement choisis et convenablement introduits dans la masse d'halogénure métallique pour que la totalité des impuretés dissoutes dans le bain de lavage soient converties en composés insolubles, avant que le bain de lavage ait eu le temps de quitter la masse d'halogénure métallique. A cet effet, les réactifs peuvent par exemple être introduits dans le bain de lavage avant que celui-ci soit mis à circuler à travers la masse d'halogénure métallique, comme décrit dans le brevet Etats-Unis 2 516 987 publié le 1er août 1950 et cédé à International Salt Company. Le carbonate de sodium et l'hydroxyde de sodium en solutions aqueuses sont des réactifs qui conviennent généralement bien dans le cas où le procédé selon l'invention est appliqué à la préparation d'une saumure de chlorure de sodium au départ d'une masse de sel contaminée par des composés solubles du calcium et du magnésium.

En variante, on peut aussi utiliser des réactifs à l'état de particules solides, qui sont dispersées de manière homogène dans la masse d'halogénure métallique, avant de traiter celle-ci avec le bain de lavage.

Selon l'invention, on règle la vitesse ascensionnelle du bain de lavage à travers la masse d'halogénure métallique, pour qu'elle soit inférieure à la vitesse de sédimentation des composés insolubles. Cette caractéristique de l'invention a pour résultat de maintenir les composés insolubles dans la masse d'halogénure métallique pendant son traitement avec le bain de lavage, de sorte qu'il n'est plus nécessaire de filtrer celui-ci par la suite.

Par ailleurs, selon une autre caractéristique du procédé selon l'invention, après avoir traité la masse d'halogénure métallique avec le bain de lavage, on la fait traverser de bas en haut avec la solution aqueuse pour y dissoudre l'halogénure métallique, on fait floculer les composés insolubles dans la solution aqueuse et on laisse sédimenter les composés insolubles floculés dans ou sur la masse d'halogénure métallique. On recueille de la sorte une saumure d'halogénure métallique de grande pureté, qui est généralement prête à l'emploi. Par ailleurs, au fur et à

mesure de la progression du procédé, les composés insolubles floculés progressent vers la zone inférieure de la masse d'halogénure métallique, où ils se rassemblent et peuvent être évacués sans difficulté.

D'une manière générale, le choix de la vitesse ascensionnelle du bain de lavage dans la masse d'halogénure métallique dépend de divers facteurs, parmi lesquels figurent notamment la nature de l'halogénure métallique, ainsi que la nature et les dimensions des particules formant les composés insolubles. Cette vitesse peut être déterminée aisément dans chaque cas particulier par un travail de routine au laboratoire.

D'une manière générale, des vitesses ascensionnelles inférieures à 2 m/h conviennent habituellement pour le bain de lavage, lorsque la masse d'halogénure métallique est une masse de chlorure de sodium et le bain de lavage est une saumure de chlorure de sodium. On préfère en général utiliser des vitesses inférieures à 1,5 m/h; des vitesses comprises entre 0,05 et 0,6 m/h se sont avérées particulièrement avantageuses.

Le moyen mis en oeuvre pour faire floculer les composés insolubles n'est pas critique, à condition qu'il ne conduise pas à une contamination de la saumure que l'on cherche à produire. En général, on obtient de bons résultats en soumettant la solution aqueuse à un déplacement ascendant à vitesse réduite, pendant un temps suffisant pour que la majeure partie des composés insolubles aient le temps de s'agréger, puis de sédimenter. Dans cette forme de réalisation de l'invention, le choix de la vitesse et de la durée de déplacement ascendant de la solution aqueuse dépend de divers facteurs, parmi lesquels figurent notamment la concentration en impuretés solubles dans la masse d'halogénure métallique utilisée, la nature des réactifs utilisés pour convertir ces impuretés solubles en composés insolubles, ainsi que la quantité de réactifs utilisée, la nature des composés insolubles et leur teneur pondérale dans la solution aqueuse, le degré de pureté recherché pour la saumure d'halogénure métallique à produire. Il est aisé, dans chaque cas particulier, de déterminer par un

travail de routine au laboratoire, les valeurs optimum de la vitesse et de la durée du déplacement ascendant de la solution aqueuse.

Le déplacement ascendant de la solution aqueuse à vitesse réduite, utilisé pour faire floculer les composés insolubles peut être confondu avec son déplacement ascendant à travers la masse d'halogénure métallique, ou bien il peut faire suite à celui-ci. En général, on préfère débuter la floculation des composés insolubles pendant le déplacement ascendant de la solution aqueuse dans la masse d'halogénure métallique, puis la poursuivre pendant un déplacement ascendant ultérieur de ladite solution aqueuse, de manière que les composés insolubles floculés sédimentent sur la masse d'halogénure métallique. A cet effet, après que la solution aqueuse a traversé la masse d'halogénure métallique, on peut par exemple diminuer sa vitesse ascensionnelle brusquement ou de manière progressive, tout en poursuivant son déplacement ascendant.

En règle générale, dans le cas où le procédé selon l'invention est appliqué à la production d'une saumure saturée de chlorure de sodium destinée à alimenter des cellules d'électrolyse pour la production de chlore, on règle la vitesse ascensionnelle de la solution aqueuse pour qu'elle soit au maximum égale à la vitesse de sédimentation de particules de composés insolubles dont le diamètre apparent est égal à 1 µm, de préférence à 0,1 µm.

En variante, on peut accélérer la floculation en ajoutant par exemple un électrolyte approprié à la solution aqueuse, avant, pendant ou après son passage à travers la masse d'halogénure métallique.

Le procédé selon l'invention peut être exécuté indifféremment de manière discontinue ou de manière continue.

Dans le cas où le procédé selon l'invention est exécuté de manière discontinue, le bain de lavage, qui est de préférence une solution aqueuse saturée en halogénure métallique, est d'abord mis à circuler de bas en haut à travers une masse d'halogénure métallique statique, dans laquelle on introduit par ailleurs les réactifs nécessaires pour convertir les impuretés solubles en

composés insolubles. Le débit du bain de lavage et la quantité de réactifs sont choisis de manière à provoquer une dissolution de la totalité des impuretés solubles indésirables de la masse d'halogénure métallique et une conversion subséquente de celles-ci en composés insolubles, in situ dans la masse d'halogénure métallique. La vitesse ascensionnelle du bain de lavage est par ailleurs maintenue inférieure à la vitesse de sédimentation des particules des composés insolubles formés, de manière à les maintenir dans la masse d'halogénure métallique. Après son passage à travers la masse d'halogénure métallique, le bain de lavage qui est recueilli contient éventuellement un reliquat des réactifs ou une faible teneur en impuretés solubles, selon que l'on a utilisé un excès ou un défaut de réactifs par rapport à la quantité d'impuretés solubles présente dans la masse d'halogénure métallique de départ. Il est généralement exempt de composés insolubles, de sorte qu'il ne doit pas subir un traitement ultérieur de filtration et peut par exemple être utilisé tel quel pour le traitement d'une autre masse d'halogénure métallique.

Après que la masse d'halogénure métallique ait été traitée avec le bain de lavage, elle est parcourue de bas en haut avec la solution aqueuse. Le débit de celle-ci est réglé pour dissoudre approximativement la totalité des particules d'halogénure métallique; après son passage à travers la masse d'halogénure métallique, on poursuit son mouvement ascendant et on règle sa vitesse ascensionnelle pour permettre une floculation des composés insolubles et leur sédimentation sur la masse d'halogénure métallique. On recueille de la sorte une saumure d'halogénure métallique de grande pureté et un brouet contenant tous les composés insolubles, qui est évacué.

Dans la mise en oeuvre du procédé selon l'invention de manière continue, il suffit généralement de faire circuler la masse d'halogénure métallique de haut en bas à contre-courant successivement du bain de lavage, puis de la solution aqueuse et d'évacuer périodiquement ou de manière continue un brouet contenant les composés insolubles qui ont floculé et sédimenté.

Dans la réalisation de cette forme d'exécution continue du procédé selon l'invention, on règle les débits respectifs de la masse d'halogénure métallique et du bain de lavage et la quantité de réactifs ajoutés à la masse d'halogénure métallique, de manière que la totalité des impuretés solubles aient été converties en composés insolubles avant que la masse d'halogénure métallique soit mise en contact avec la solution aqueuse.

En régime, la solution concentrée d'halogénure métallique obtenue par passage de la solution aqueuse à travers la masse d'halogénure métallique est avantageusement divisée en deux fractions, dont l'une est utilisée à titre de bain de lavage pour le traitement d'une masse subséquente d'halogénure métallique et dont l'autre est soumise à un déplacement ascendant à vitesse réduite, pour permettre la floculation des composés insolubles et leur sédimentation subséquente. Dans la mise en oeuvre de cette variante d'exécution du procédé selon l'invention, la fraction de solution utilisée à titre de bain de lavage d'une masse subséquente d'halogénure métallique correspond généralement à moins de 15 % du poids total de la solution concentrée susdite; elle est de préférence comprise entre 2 et 10 % du poids de ladite solution concentrée.

Selon une autre variante de l'invention, après son passage à travers la masse d'halogénure métallique, le bain de lavage est recyclé en partie ou en totalité dans la solution aqueuse qui est mise à circuler de bas en haut à travers la masse d'halogénure métallique, pour produire la saumure. Cette variante de l'invention est avantageuse dans le cas où on utilise un excès de réactifs par rapport aux impuretés solubles contenues dans la masse d'halogénure métallique. Elle évite en outre de rejeter un bain de lavage résiduaire.

L'invention concerne aussi une installation pour la mise en oeuvre du procédé selon l'invention, qui comprend une enceinte composée d'une chambre supérieure qui débouche dans une chambre inférieure, un dispositif d'admission d'une masse d'halogénure métallique contenant des impuretés solubles dans la partie supérieure de la chambre supérieure, un conduit d'admission d'une solution aqueuse dans la chambre inférieure, un conduit d'extraction de la saumure hors de la chambre inférieure, un conduit d'extraction d'un bain de lavage de la masse d'halogénure métallique hors de la partie supérieure de la chambre supérieure et un dispositif d'admission dans la masse d'halogénure métallique, d'au moins un réactif pour convertir les impuretés solubles en composés insolubles; selon l'invention, le conduit d'admission de la solution aqueuse débouche dans la partie inférieure de la chambre inférieure et le conduit d'extraction de saumure de la chambre inférieure relie la partie supérieure de ladite chambre à une chambre de floculation et de sédimentation des composés insolubles.

Dans l'installation selon l'invention, la chambre inférieure peut généralement avoir la forme d'un cylindre vertical ouvert à son extrémité supérieure ou d'un cône dont la section transversale va en augmentant du bas vers le haut. La chambre supérieure peut consister en un cylindre vertical sans fond, débouchant dans la chambre inférieure.

La chambre de floculation et de sédimentation peut consister en une chambre verticale, par exemple une chambre cylindrique ou annulaire disposée à côté ou autour de la chambre supérieure de l'enceinte, au-dessus de la chambre inférieure.

Pendant le fonctionnement de l'installation selon l'invention, de l'eau ou une solution aqueuse diluée d'halogénure métallique est introduite dans le bas de la chambre inférieure et est mise à circuler de bas en haut dans celle-ci. Simultanément, une masse d'halogénure métallique contenant des impuretés solubles est introduite par le haut de la chambre supérieure et un ou plusieurs réactifs capables de convertir les impuretés solubles de la masse d'halogénure métallique en composés insolubles sont introduits dans ladite masse.

L'eau ou la solution aqueuse diluée d'halogénure métallique traverse la masse d'halogénure métallique contenue dans la chambre inférieure de l'enceinte, puis se divise en deux fractions. Une

des fractions est dirigée vers la chambre supérieure où elle va servir de bain de lavage de la masse d'halogénure métallique qui s'y trouve; pendant son passage ascendant dans la chambre supérieure, elle dissout les impuretés solubles de la masse d'halogénure métallique, qui sont ensuite converties en composés insolubles par les réactifs, in situ dans la masse d'halogénure métallique. On soutire le bain de lavage résiduaire à la partie supérieure de la chambre supérieure, tandis que les composés insolubles restent dans la masse d'halogénure métallique et progressent avec celle-ci vers la chambre inférieure de l'enceinte.

La seconde fraction de la solution qui a traversé la chambre inférieure est dirigée vers la chambre de floculation et de sédimentation. Sa vitesse ascendante est généralement suffisante pour qu'elle entraîne avec elle les petites particules des composés insolubles présents dans la chambre inférieure. Dans la chambre de floculation et de sédimentation, ces petites particules floculent et les composés floculés résultants sédimentent, retournent par gravité vers la chambre inférieure de l'enceinte, y progressent vers le bas avec la masse d'halogénure métallique et sont extraits périodiquement à l'état d'un brouet.

On recueille hors de la chambre de floculation et de sédimentation une saumure d'halogénure métallique exempte d'impuretés, qui est généralement prête à l'emploi.

Des particularités et détails de l'invention ressortiront de la description suivante de quelques formes de réalisation de l'installation selon l'invention, en référence aux dessins annexés.

La figure 1 est une vue schématique, en section transversale verticale, d'une première forme de réalisation de l'installation selon l'invention;

La figure 2 est une vue analogue à la figure 1, d'une seconde forme de réalisation de l'installation selon l'invention.

Dans ces figures, des mêmes notations de référence désignent des éléments identiques.

L'installation représentée à la figure 1 comprend une enceinte constituée d'une chambre cylindrique supérieure 1, débouchant

dans une chambre inférieure 3 ayant un profil conique dont la section transversale va en augmentant du bas vers le haut.

La chambre cylindrique 1 est en communication, à sa partie supérieure, avec une trémie 2 pour une masse d'halogénure métallique contenant des impuretés solubles.

La chambre conique 3 communique, à sa partie inférieure, avec un conduit 6 pour l'admission d'eau ou d'une solution aqueuse diluée d'halogénure métallique. Sa paroi latérale est prolongée vers le haut par une paroi cylindrique 4 qui délimite une chambre annulaire 5 autour de la paroi de la chambre cylindrique 1.

Un réservoir 7 est branché sur le conduit 6, via une conduite 8 et une vanne d'ouverture réglable 9. Ce réservoir 7 est destiné à contenir un ou plusieurs réactifs appropriés pour convertir les impuretés solubles de la masse d'halogénure métallique en composés insolubles.

La chambre 1 communique, à sa partie supérieure, avec un conduit 11 pour le soutirage d'un bain de lavage résiduaire de la masse d'halogénure métallique contenue dans la chambre 1.

La chambre annulaire 5 communique à sa partie supérieure avec un conduit 10 pour le soutirage de la saumure d'halogénure métallique que l'on vise à produire.

Le conduit 11 est en général situé au même niveau que le conduit 10 ou, de préférence, à un niveau inférieur.

Dans un mode d'exploitation de l'installation de la figure 1, appliqué au cas de la production d'une saumure de chlorure de sodium destinée par exemple à l'alimentation d'une soudière à l'ammoniaque ou de cellules d'électrolyse pour la production de chlore, on charge une masse de sel dans la trémie 2 et on introduit une solution aqueuse d'hydroxyde de sodium et de carbonate de sodium dans le réservoir 7. On envoie dans le conduit 6 de l'eau ou une solution aqueuse diluée de chlorure de sodium, par exemple une solution aqueuse contenant entre 20 et 23 % en poids de chlorure de sodium. Pendant son passage dans le conduit 6, l'eau ou la solution diluée se charge d'une quantité définie de la solution provenant du réservoir 7 et pénètre ensuite dans la

chambre inférieure conique 3. Pendant sa circulation ascendante dans la chambre 3, la solution aqueuse dissout progressivement du chlorure de sodium de la masse de sel, et la saumure résultante est ensuite divisée en deux fractions distinctes : une première fraction passe dans la conduite annulaire 5 et est soutirée par le conduit 10; une seconde fraction remonte à travers la masse de sel contenue dans la chambre supérieure 1 et est soutirée par le conduit 11. Pendant son ascension dans la chambre 1, à contre-courant de la masse de sel, la saumure sert de bain de lavage du sel; à cet effet, elle dissout progressivement les impuretés solubles de la masse de sel et celles-ci sont ensuite immédiatement converties en composés insolubles par les réactifs provenant du réservoir 7, selon les réactions :

$$CaCl_2 + Na_2CO_3 \longrightarrow CaCO_3 + 2NaCl$$

$$MgCl_2 + 2NaOH \longrightarrow Mg(OH)_2 + 2NaCl$$

Le débit d'eau ou de solution aqueuse dans le conduit 6 est réglé en fonction des caractéristiques constructives de l'installation, de manière à obtenir une saumure sensiblement saturée en chlorure de sodium au niveau de l'arête inférieure 12 de la paroi de la chambre 1. De cette façon, on soutire en 10 une saumure saturée en chlorure de sodium, et la fraction de saumure qui traverse la masse de sel dans la chambre 1 ne dissout plus de chlorure de sodium.

Les dimensions de l'installation et ses caractéristiques d'exploitation sont par ailleurs choisies de manière que la vitesse ascendante de la saumure de lavage dans la chambre cylindrique 1 soit inférieure à la vitesse de sédimentation des composés insolubles. Ces derniers progressent de la sorte de la chambre supérieure 1 vers la chambre inférieure 3 avec la masse de sel. Dans la chambre inférieure 3, la vitesse ascensionnelle de la saumure est généralement suffisante pour que les petites particules des composés insolubles provenant de la chambre supérieure 1 soient entraînées dans la chambre annulaire 5. Pendant leur mouvement ascendant dans celle-ci, ces particules floculent progressivement et les composés floculés résultants sédimentent

sur la masse de sel de la chambre 3 et migrent ensuite avec celle-ci vers le bas de la chambre 3, dans une cavité 13 d'où ils sont évacués périodiquement à l'état d'un brouet aqueux, via une vanne 14.

On recueille par le conduit 10, une saumure saturée de chlorure de sodium, dont les teneurs en impuretés solubles et en composés insolubles sont généralement suffisamment faibles pour qu'elle puisse être utilisée telle quelle dans une cellule d'électrolyse ou une soudière à l'ammoniaque.

Le bain de lavage résiduaire recueilli par le conduit 11 est une saumure saturée de chlorure de sodium, qui contient encore des réactifs ou qui est contaminée par des impuretés dissoutes, selon que l'on a utilisé un excès ou un défaut de réactifs par rapport aux impuretés solubles de la masse de sel. Selon son état de pureté et sa destination, elle peut être utilisée telle quelle ou subir un traitement ultérieur d'épuration.

Selon une variante préférée de ce mode d'exploitation de l'installation de la figure 1, une partie ou la totalité du courant de saumure de lavage résiduaire provenant du conduit 11 est recyclée dans le conduit 6, via une conduite 15 et une pompe 16. Cette variante de l'invention est intéressante dans le cas où on utilise un excès de réactifs par rapport aux impuretés solubles du sel, ainsi que lorsqu'on désire éviter de rejeter dans l'environnement une saumure de lavage résiduaire.

Dans l'installation conforme à l'invention, représentée à la figure 2, la chambre annulaire 5 présente une zone inférieure conique 17 dont la section transversale va en augmentant du bas vers le haut. Par ailleurs, le réservoir 7 contenant les réactifs est branché sur la conduite 15 servant à recycler dans le conduit 6, la saumure résiduaire qui est extraite de la chambre supérieure 1.

Cette forme de réalisation de l'invention permet à la fois de réaliser des débits de saumure plus importants dans l'appareil et de produire des saumures de plus grande pureté. Les composés insolubles, qui sont entraînés avec le courant de saumure dans la

conduite annulaire 5, y floculent et sédimentent progressivement dans le fond de la zone conique 17, sur la masse de sel contenue dans la chambre 3. Elles sont évacuées périodiquement par des vannes 18 réparties à la périphérie de la paroi de la zone conique 17.

L'exploitation des installations des figures 1 et 2 peut aussi, en variante, être réglée pour que la saumure contenue dans la chambre 3, au niveau de l'arête inférieure 12 de la paroi de l'enceinte 1, ne soit pas saturée en chlorure de sodium, de manière à recueillir par le conduit 10 une saumure non saturée en chlorure de sodium.

Les exemples d'application suivants sont destinés à illustrer l'invention.

Exemple 1

On a préparé une saumure saturée de chlorure de sodium dans une installation de laboratoire d'environ 2,5 l de capacité, analogue à celle représentée à la figure 1.

On a utilisé à cet effet une masse de sel provenant de l'évaporation d'une saumure obtenue par circulation forcée d'eau à travers un gisement souterrain de sel gemme. La masse de sel contenait des impuretés solubles du calcium et du magnésium, correspondant à 10 mg d'ions calcium et 0,4 mg d'ions magnésium par kg.

L'installation a été alimentée à raison de 95 g de sel par heure; simultanément, on a introduit à la base de l'installation 1,59 kg/h d'une solution aqueuse diluée de chlorure de sodium et 0,10 l/h d'une solution de réactifs.

La solution diluée de chlorure de sodium avait la composition suivante :

$NaCl$ : 220 g/kg
$Ca^{++}$ : 2,3 mg/kg
$Mg^{++}$ : 0,09 mg/kg

La solution de réactifs était une solution aqueuse non filtrée de carbonate de sodium et d'hydroxyde de sodium, contenant :

$CO_3^{--}$ : 17,5 g/l
$OH^-$ : 0,9 g/l
$Ca^{++}$ : 1 mg/l
$Mg^{++}$ : 4,6 mg/l

La température de l'installation a été maintenue à environ 70°C.

Pendant le fonctionnement de l'installation en régime, la fraction de saumure soutirée hors de l'enceinte cylindrique 1 par le conduit 11 a été recyclée en continu dans la solution aqueuse diluée introduite par le conduit 6, et on a extrait hors de la chambre annulaire 5, par le conduit 10, 1,78 kg de saumure saturée par heure.

A l'issue de 6 heures consécutives de fonctionnement continu de l'installation, on a relevé les teneurs en impuretés de la saumure saturée extraite de la chambre annulaire 5 :

$Ca^{++}$ : 0,3 mg/kg
$Mg^{++}$ : $\leq$ 0,02 mg/kg

On a par ailleurs établi le bilan horaire des impuretés introduites dans le procédé; les résultats sont consignés au tableau suivant :

| | Débits horaires (mg) | |
|---|---|---|
| | Ca | Mg |
| Masse de sel | 0,95 | 0,038 |
| Solution diluée | 3,66 | 0,143 |
| Solution de réactifs | 0,10 | 0,46 |
| TOTAL | 4,71 | 0,64 |
| Saumure saturée | 0,53 | 0,04 |

On en déduit les rendements d'épuration en calcium et en magnésium :

$$R_{Ca} = \frac{4,71-0,53}{4,71} \times 100 = 88\ \%$$

$$R_{Mg} = \frac{0,64-0,04}{0,64} \times 100 = 94\ \%$$

Exemple 2

On a répété l'essai de l'exemple 1 au départ des matières suivantes :

(a) 105 g/h de sel extrait par voie mécanique d'un gisement de sel gemme et contenant 2,7 g d'ions calcium et 0,15 g d'ions magnésium par kg, à l'état d'impuretés solubles;

(b) 1,50 kg/h d'une solution diluée de chlorure de sodium contenant :

NaCl : 220 g/kg
$Ca^{++}$ : $\leq$ 0,2 mg/kg
$Mg^{++}$ : $\leq$ 0,02 mg/kg

(c) à titre de réactifs, 0,125 l/h d'une solution aqueuse non filtrée de carbonate de sodium et d'hydroxyde de sodium contenant :

$CO_3^{--}$ : 14 g/l
$OH^-$ : 0,7 g/l
$Ca^{++}$ : 0,9 mg/l
$Mg^{++}$ : 3,7 mg/l

Le débit de saumure extrait hors de la chambre annulaire 5 par le conduit 10 était de 1,72 kg/h, et présentait la composition suivante en impuretés, après 6 heures de fonctionnement ininterrompu :

$Ca^{++}$ : 0,4 mg/kg
$Mg^{++}$ : 0,03 mg/kg

Les rendements d'épuration, calculés de manière décrite à l'exemple 1, ont été supérieurs à 99 % à la fois pour le calcium et le magnésium.

## R E V E N D I C A T I O N S

1 - Procédé pour la production d'une saumure d'halogénure métallique, au départ d'une masse d'halogénure métallique contenant des impuretés solubles, selon lequel on dissout d'abord les impuretés solubles dans un bain de lavage que l'on fait circuler de bas en haut à travers la masse d'halogénure métallique, on les convertit ensuite en composés insolubles, puis on dissout la masse d'halogénure métallique, exempte d'impuretés solubles, dans une solution aqueuse, caractérisé en ce qu'on règle la vitesse ascensionnelle du bain de lavage pour qu'elle soit inférieure à la vitesse de sédimentation des composés insolubles, et en ce que, pour dissoudre la masse d'halogénure métallique dans la solution aqueuse, on fait circuler celle-ci de bas en haut à travers la masse d'halogénure métallique, on y fait floculer les composés insolubles et on laisse sédimenter les composés insolubles floculés dans ou sur la masse d'halogénure métallique.

2 - Procédé selon la revendication 1, caractérisé en ce que l'on utilise comme bain de lavage une solution aqueuse saturée d'halogénure métallique.

3 - Procédé selon la revendication 1 ou 2, caractérisé en ce qu'après avoir fait circuler la solution aqueuse de bas en haut à travers la masse d'halogénure métallique, on la divise en deux fractions, on fait floculer les composés insolubles d'une des fractions, puis les laisse sédimenter dans ou sur la masse d'halogénure métallique, et on utilise la seconde fraction comme bain de lavage d'une autre masse d'halogénure métallique.

4 - Procédé selon l'une quelconque des revendications 1 à 3, caractérisé en ce qu'on règle la vitesse ascensionnelle du bain de lavage à travers la masse d'halogénure métallique entre 0,05 et 1,5 m/h.

5 - Procédé selon l'une quelconque des revendications 1 à 4, caractérisé en ce qu'on règle la vitesse ascensionnelle de la solution aqueuse pour qu'elle soit inférieure à la vitesse de

sédimentation de particules floculées des composés insolubles, ayant un diamètre moyen égal à 0,1 µm.

6 - Procédé selon l'une quelconque des revendications 1 à 5, caractérisé en ce qu'une partie au moins du bain de lavage qui a traversé la masse d'halogénure métallique est mélangée à la solution aqueuse.

7 - Installation pour la production d'une saumure d'halogénure métallique au départ d'une masse d'halogénure métallique contenant des impuretés solubles, comprenant une enceinte composée d'une chambre supérieure qui débouche dans une chambre inférieure, un dispositif d'admission d'une masse d'halogénure métallique dans la partie supérieure de la chambre supérieure, un conduit d'admission d'une solution aqueuse dans la chambre inférieure, un conduit d'extraction de la saumure hors de la chambre inférieure, un conduit d'extraction d'un bain de lavage de la masse d'halogénure métallique hors de la partie supérieure de la chambre supérieure et un dispositif d'admission dans la masse d'halogénure métallique, d'au moins un réactif pour convertir les impuretés solubles en composés insolubles, caractérisée en ce que le conduit d'admission de la solution aqueuse débouche dans la partie inférieure de la chambre inférieure, et le conduit d'extraction de saumure de la chambre inférieure relie la partie supérieure de ladite chambre à une chambre de floculation et de sédimentation des composés insolubles.

8 - Installation selon la revendication 7, caractérisée en ce que la chambre de floculation et de sédimentation est une chambre annulaire qui est disposée dans le prolongement de la chambre inférieure, autour de la chambre supérieure.

9 - Installation selon la revendication 7 ou 8, caractérisée en ce que la chambre annulaire présente une section transversale qui va en augmentant du bas vers le haut.

10 - Installation selon l'une quelconque des revendications 7 à 9, caractérisée en ce que le conduit d'extraction du bain de lavage débouche dans le conduit d'admission de la solution aqueuse.

FIG 1

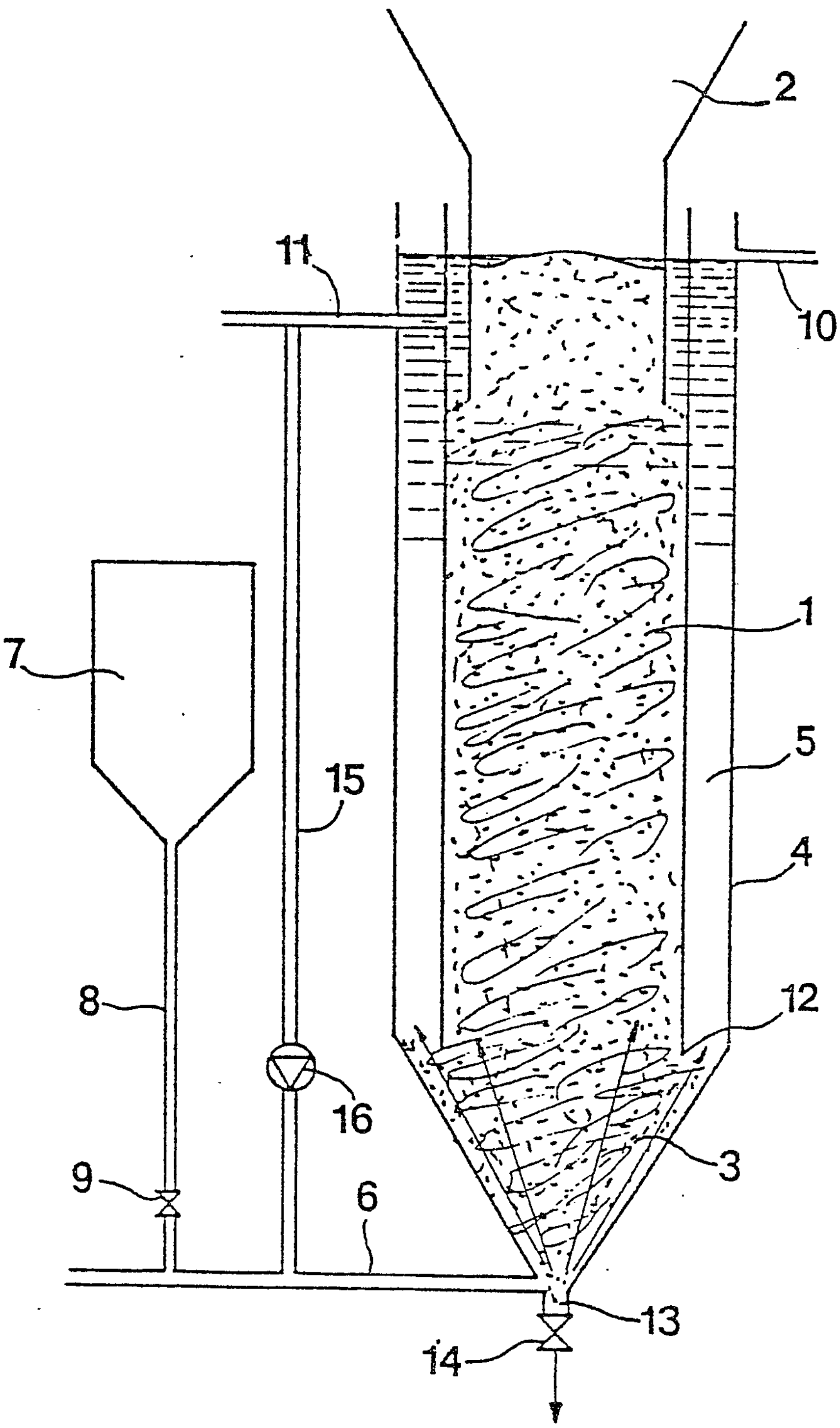

FIG 2

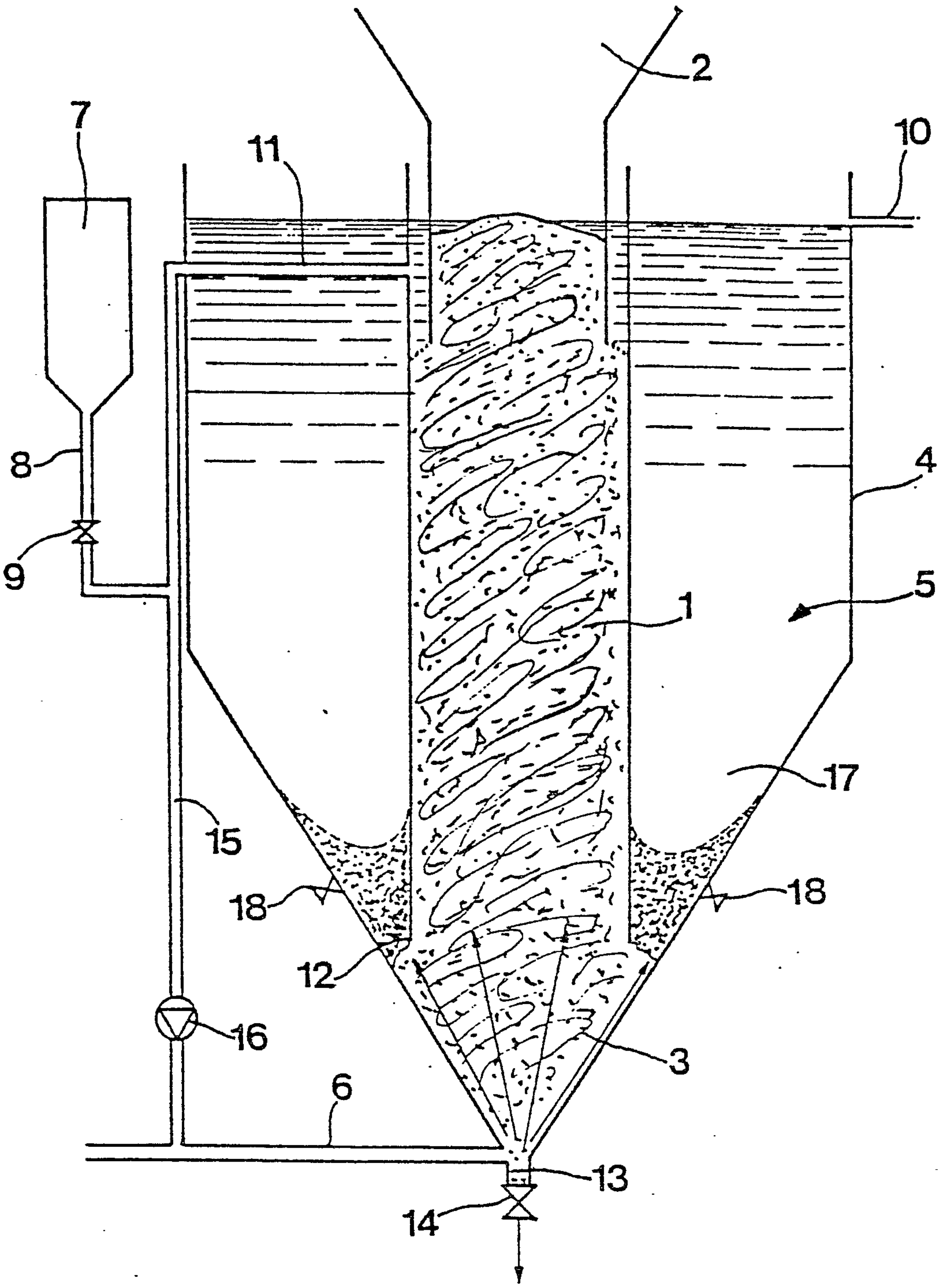

Office européen des brevets

# RAPPORT DE RECHERCHE EUROPEENNE

Numéro de la demande
EP 80 20 1142

## DOCUMENTS CONSIDERES COMME PERTINENTS

| Catégorie | Citation du document avec indication, en cas de besoin, des parties pertinentes | Revendication concernée |
|---|---|---|
| AD | US - A - 2 516 987 (HENGERER) | |
| A | CHEMICAL ABSTRACTS, vol. 75, no. 26, 27 décembre 1971, réf. no. 153406K, page 95<br>Columbus, Ohio, US<br>& JP - A - 71 07245 (EBARA-INFILCO) (23-02-1971)<br>-- | |
| A | CHEMICAL ABSTRACTS, vol. 79, no. 16, 22 octobre 1973, réf. no. 99897P, page 549<br>Columbus, Ohio, US<br>& JP - A - 73 45478 (EBARA-INFILCO) (29-06-1973)<br>---- | |

CLASSEMENT DE LA DEMANDE (Int. Cl. 3)
C 01 D 3/08
3/14
B 01 D 11/02

DOMAINES TECHNIQUES RECHERCHES (Int. Cl. 3)
C 01 D 3/08
3/14
3/04
B 01 D 11/02
C 01 D 3/18
C 01 G 1/06

CATEGORIE DES DOCUMENTS CITES
X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 17-02-1981 | V. BELLINGEN |